# EUROPEAN PATENT APPLICATION

(11) **EP 1 988 594 A2**
(43) Date of publication of application: **05.11.2008**
(21) Application number: 08154740.8
(22) Date of filing: 17.04.2008
(51) Int. Cl.: H01M 8/24, H01M 8/02

(54) **Fuel Cell Stack and Manufacturing Method Thereof**

(30) Priority: 24.04.2007 KR 20070039836
(71) Applicant: Samsung SDI Co., Ltd., Suwon-si, Gyeonggi-do (KR)
(72) Inventor: Park, Chan-Hee c/o Legal & IP Team Samsung SDI Co., Ltd., Gyeonggi-do (KR); Lee, Dong-Uk c/o Legal & IP Team Samsung SDI Co., Ltd., Gyeonggi-do (KR); An, Seong-Jin c/o Legal & IP Team Samsung SDI Co., Ltd., Gyeonggi-do (KR); Lee, Chi-Seung c/o Legal & IP Team Samsung SDI Co., Ltd., Gyeonggi-do (KR)
(74) Representative: Perkins, Dawn Elizabeth

(57) **Abstract**

A fuel cell stack and a manufacturing method thereof are disclosed. Tn one embodiment, the fuel cell stack includes: i) a membrane electrode assembly configured of an anode electrode, a cathode electrode, and a polymer electrolyte membrane positioned therebetween, ii) a first plate including a fuel flow channel facing the anode electrode and contacting the anode electrode and iii) a second plate including an oxidant flow channel facing the cathode electrode and contacting the cathode electrode, wherein the membrane electrode assembly, the first bipolar plate, and the second bipolar plate each includes a stack direction display parts, which are arranged in a line. At least one embodiment of the invention is capable of preventing an anode surface and a cathode surface of a part from being reversely stacked in manufacturing a stack type fuel cell.

## Description

The present disclosure relates to a fuel cell stack and a manufacturing method thereof.

Since a fuel cell is a pollution-free power supply apparatus, it has been spotlighted as one of next generation clean energy power generation systems. It has advantages that the power generation system using the fuel cell can be used in a self-generator for a large building, a power supply for an electric vehicle, a portable power supply, etc. The fuel cell is basically operated with the same principle and is sorted into a molten carbonate fuel cell (MCFC), a solid oxide fuel cell (SOFC), a polymer electrolyte membrane fuel cell (PEFC), a phosphoric acid fuel cell (PAFC), an alkaline fuel cell (AFC), etc., in accordance with an electrolyte used.

Among others, the polymer electrolyte fuel cell (PEFC) is sorted into a polymer electrolyte membrane fuel cell or proton exchange membrane fuel cell (PEMFC) and a direct methanol fuel cell (DMFC) in accordance an electrolyte used. Since the polymer electrolyte fuel cell uses solid polymer as electrolyte, it has no risk of corrosion or evaporation due to the electrolyte and can obtain high current density per unit area. Moreover, since the polymer electrolyte membrane fuel cell is very high in output characteristic and low in an operating temperature as compared to other kinds of fuel cells, it has been actively developed as a portable power supply for supplying power to a vehicle, a distributed power supply for supplying power to a house or a public building, and a small power supply for supplying power to electronic equipments, etc. Since the direct methanol fuel cell directly uses liquid-phase fuel such as methanol, etc. without using a fuel reformer and is operated at an operating temperature less than 100°C, it is advantageous in being suitable for a portable power supply or a small power supply.

The polymer electrolyte fuel cell described above has voltage of 1V or so. Accordingly, in order to manufacture the fuel cell outputting desired voltage higher than 1V, a stack structure to facilitate the electrical connection of a plurality of unit cells in series has mainly been used. The fuel cell stack is manufactured by alternatively stacking a membrane electrode assembly configured of an anode electrode, a cathode electrode, and a polymer electrolyte membrane positioned therebetween and a bipolar transistor. The bipolar transistor is referred to as a separator.

The foregoing discussion is only to provide background information and does not constitute an admission of prior art.

One aspect of the present invention provides a fuel cell stack and a manufacturing method thereof capable of easily performing a stack work without confusing anode surfaces and cathode surfaces of an MEA and a BP in manufacturing the stack

Another aspect of the present invention provides a fuel cell stack, including: a membrane electrode assembly configured of an anode electrode, a cathode electrode, and a polymer electrolyte membrane positioned therebetween; a first plate including a fuel flow channel facing the anode electrode and contacting the anode electrode; and a second plate including an oxidant flow channel facing the cathode electrode and contacting the cathode electrode, wherein the membrane electrode assembly, the first bipolar plate, and the second bipolar plate each includes a stack direction display parts, which are arranged in a line.

In one embodiment, the stack direction display parts are installed the same position to be arranged in a line when stacking the membrane electrode assembly, the first bipolar plate, and the second bipolar plate. The stack direction display part may include a side prominence and depression part of any one or more than two of a prominence and depression part in a concave shape, a prominence and depression part in a convex shape, and prominence and depression part in concave and convex combining shapes. The side prominence and depression part can be installed on more than two sides of the fuel cell stack.

The stack direction display part may include a side corner cutting part. The side corner cutting part can be installed on two or three neighboring side corners of the fuel cell stack.

The fuel cell stack may further include a first gasket inserted between the membrane electrode assembly and the first plate and a second gasket inserted between the membrane electrode assembly and the second plate.

The fuel cell stack may further include a bipolar plate integrally manufactured to expose the fuel flow channel of the first plate and the oxidant flow channel of the second plate on both surfaces thereof. The fuel cell stack may further include another gasket inserted between the bipolar plate and the membrane electrode assembly.

The fuel cell stack may further include a pair of end plates oppositely positioned to each other each contacting other surface of the first plate and other surface of the second plate.

The fuel cell stack may further include a tie means pressing the pair of end plates to maintain constant two forces in a direction in which they are opposite to each other.

Another aspect of the invention provides a manufacturing method of a fuel cell stack, including: preparing a membrane electrode assembly configured of an anode electrode, a cathode electrode, and a polymer electrolyte membrane positioned therebetween and having a first stack direction display part formed on the side of the electrolyte membrane; preparing a first plate having a fuel flow channel formed on one surface thereof and having a second stack direction display part formed on the side thereof and a second plate having an oxidant flow channel formed on one surface thereof and having a third stack direction display part formed on the side thereof; and stacking the membrane electrode assembly, the first plate, and the second plate to arrange the first, second, and third stack direction display parts in a line.

In one embodiment, the preparing the membrane having a first stack direction display part formed on the side thereof may include forming a prominence and depression part in a concave shape by punching, at a constant interval, the corner of the electrolyte membrane manufactured as the membrane electrode assembly through a continuous process.

The preparing the first and second plates each having the second and third stack direction display parts on the sides thereof may include forming a prominence and depression part in a concave shape on the respective sides of the first and second plates by grinding a portion of the sides of the first and second plates. More than two prominence and depression parts of the membrane electrode assembly and more than two prominence and depression parts of the first and second plates can be installed on one side or the prominence and depression part of the membrane electrode assembly and the prominence and depression parts of the first and second plates can be on more than two sides.

The preparing the membrane electrode assembly having the first stack direction display part on the side of the electrolyte membrane may include forming a corner cutting part by cutting the side corner of the electrolyte member. The preparing the first and second plates each having the second and third stack direction display parts on the sides thereof may include forming a corner cutting part by cutting or grinding the side corners of the first and second plates. The corner cutting parts of the membrane electrode assembly and the first and second plates can be formed on two or three neighboring side corners of the membrane electrode assembly and the first and second plates.

The manufacturing method of the fuel cell stack may further include positioning the first gasket between the membrane electrode assembly and the first plate and positioning the second gasket between the membrane electrode assembly and the second plate.

The manufacturing method of the fuel cell stack may further include positioning the first end plate on other surface of the first plate and positioning the second end plate on other surface of the second plate; and tying the first and second end plates with constant force by means of the tie means. Another aspect of the invention provides a fuel cell stack comprising: i) a membrane electrode assembly plate comprising an anode electrode, a cathode electrode, and a polymer electrolyte membrane positioned therebetween, ii) a first plate comprising a fuel flow channel facing the anode electrode and configured to flow a fuel therethrough while contacting the anode electrode and iii) a second plate comprising an oxidant flow channel facing the cathode electrode and configured to flow an oxidant therethrough while contacting the cathode electrode, wherein the membrane electrode assembly plate, the first plate, and the second plate each comprises a plate orientation indicator configured to indicate an orientation thereof, and wherein the plate orientation indicator of each plate is aligned with the plate orientation indicators of the other plates when the plates in the stack are properly oriented.

The plate orientation indicator may comprise a bump on a side of each plate, and wherein the bumps of the plates have a substantially identical shape and size. The plate orientation indicator may comprise a notch on a side of each plate, and wherein the notches of the plates have a substantially identical shape and size. Each plate may comprise two or more plate orientation indicators. Each plate may comprise two or more plate orientation indicators on a side thereof.

Each plate may comprise at least one plate orientation indicator on a side thereof and further comprises at least one plate orientation indicator on another side thereof. Each of the membrane electrode assembly plate and the first and second plates may be substantially rectangular, and wherein each plate orientation indicator comprises at least one corner-cut of each plate. Each plate orientation indicator may comprise two or three corner-cuts in the neighboring corners of the plates.

The fuel cell stack may further comprise a first gasket inserted between the membrane electrode assembly plate and the first plate and a second gasket inserted between the membrane electrode assembly plate and the second plate. The fuel cell stack may further comprise a third plate which has a fuel flow channel and an oxidant flow channel on both surfaces thereof, wherein the third plate is interposed between the membrane electrode assembly plate and the second plate. The fuel cell stack may further comprise a pair of end plates opposing each other, wherein each of the first and second plates comprises front and rear surfaces opposing each other, wherein the first and second plates contact the membrane electrode assembly plate via the front surfaces thereof, respectively, and wherein the pair of end plates contact the rear surfaces of the first and second plates, respectively. The fuel cell stack may further comprise a combiner configured to combine the membrane electrode assembly plate, the first and second plates and the end plates so as to form a fuel cell stack.

Another aspect of the invention provides a manufacturing method of a fuel cell stack comprising: i) providing a membrane electrode assembly plate comprising an anode electrode and a cathode electrode, wherein the membrane electrode assembly plate comprises a first plate orientation indicator configured to indicate an orientation thereof, ii) providing a first plate comprising a fuel flow channel facing the anode electrode and configured to flow a fuel therethrough while contacting the anode electrode, wherein the first plate comprises a second plate orientation indicator configured to indicate an orientation thereof, iii) providing a second plate comprising an oxidant flow channel facing the cathode electrode and configured to flow an oxidant therethrough while contacting the cathode electrode, wherein the second plate comprises a third plate orientation indicator configured to indicate an orientation thereof and iv) stacking the membrane electrode assembly plate, the first plate, and the second plate such that the plate orientation indicator of each plate is aligned with the plate orientation indicators of the other plates.

The providing of the membrane electrode assembly plate may comprise forming a notch by punching a side portion thereof. The providing of the first and second plates may comprise forming notches by grinding sides of the first and second plates. Each plate may comprise two or more plate orientation indicators. Each plate may comprise at least one plate orientation indicator on a side thereof and may further comprise at least one plate orientation indicator on another side thereof. Each of the membrane electrode assembly plate and the first and second plates may be substantially rectangular, wherein the method may further comprise forming at least one corner-cut of each plate by cutting or grinding at least one corner of each plate.

The manufacturing method may further comprise: positioning a first gasket between the membrane electrode assembly plate and the first plate and positioning the second gasket between the membrane electrode assembly plate and the second plate. The manufacturing method may further include providing first and second end plates, wherein each of the first and second plates comprises front and rear surfaces opposing each other, wherein the first and second plates contact the membrane electrode assembly plate via the front surfaces thereof, respectively, and wherein the first and second end plates contact the rear surfaces of the first and second plates, respectively; positioning the first and second end plates on the rear surfaces of the first and second plates, respectively; and combining the membrane electrode assembly plate, the first and second plates and the end plates so as to form a fuel cell stack.

Still another aspect of the invention provides a fuel cell stack comprising: i) a membrane electrode assembly plate comprising an anode electrode and a cathode electrode, ii) a first plate comprising a fuel flow channel facing the anode electrode and configured to flow a fuel therethrough while contacting the anode electrode and iii) a second plate comprising an oxidant flow channel facing the cathode electrode and configured to flow an oxidant therethrough while contacting the cathode electrode, wherein each of the membrane electrode assembly plate and the first and second plates comprises means for indicating an orientation of the plates, and wherein the indicating means of each plate is aligned with the indicating means of the other plates when the plates in the stack are properly oriented.

The indicating means may comprise at least one of a bump on a side of each plate and a notch on a side of each plate. Each of the membrane electrode assembly plate and the first and second plates may be substantially rectangular, wherein the indicating means may comprise at least one corner-cut of each plate.

Embodiments of the invention will be described in conjunction with the accompanying drawings.
FIG. 1 is a schematic view of a typical fuel cell stack.
FIG. 2a is a plan view showing an anode surface of a membrane electrode assembly in the fuel cell stack of FIG. 1.
FIG. 2b is a plan view showing a cathode surface of the MEA in the fuel cell stack of FIG. 1.
FIG. 2c is a plan view showing an anode surface of a bipolar plate in the fuel cell stack of FIG. 1.
FIG. 2d is a plan view showing a cathode surface of the bipolar plate in the fuel cell stack of FIG. 1.
FIG. 3 is a schematic view of the fuel cell stack according to one embodiment of the present invention.
FIG. 4 is an exploded perspective view showing the fuel cell stack according to one embodiment of the present invention.
FIG. 5 is a perspective view showing a cathode surface of an MEA in the fuel cell stack of FIG. 4.
FIG. 6 is a perspective view showing an anode surface of a BP in the fuel cell stack of FIG. 4.
FIGS. 7a to 7e are schematic views of a fuel cell stack according to another embodiment of the present invention.
FIG. 8 is a flow chart for explaining a manufacturing method of the fuel cell stack according to one embodiment of the present invention.

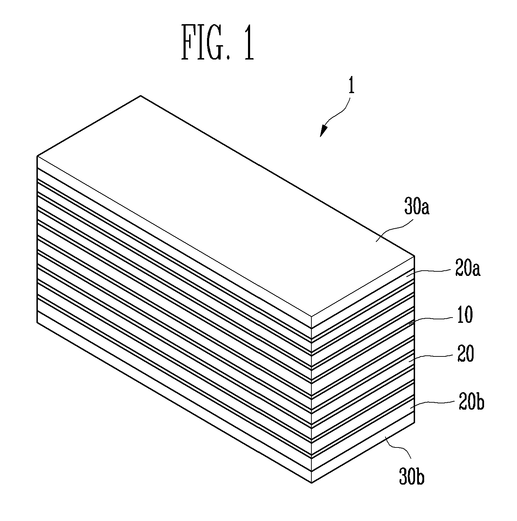

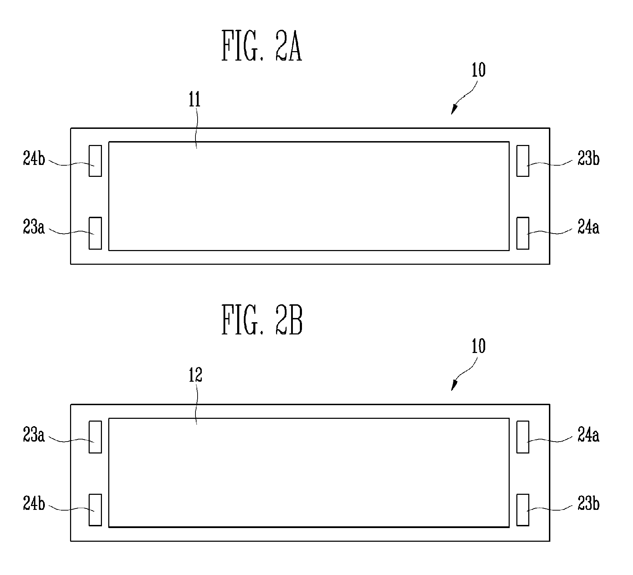

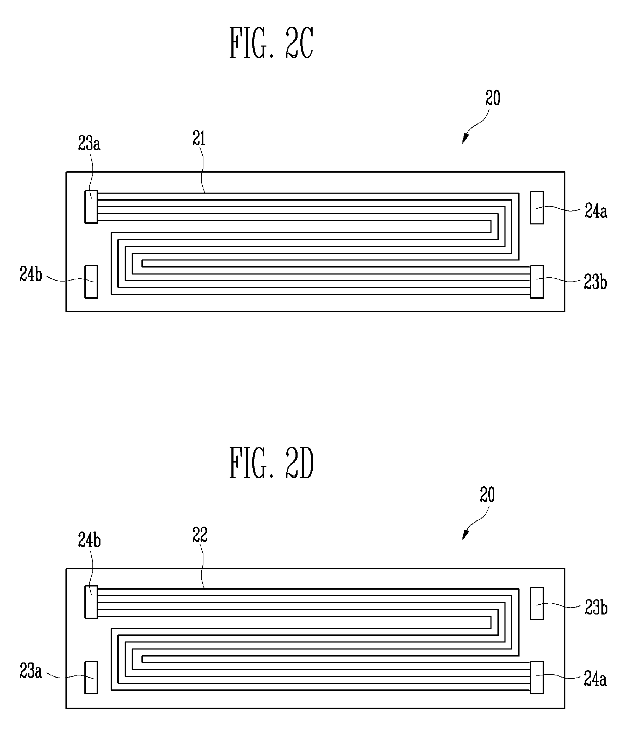

FIG. 1 is a schematic view of a typical fuel cell stack. As shown in FIG. 1, an anode surface and a cathode surface of a membrane electrode assembly (MEA) 10 may be substantially the same in appearance shown in FIGS. 2a, 2b, and an anode surface and a cathode surface of a bipolar plate (BP) 20 may be substantially the same in appearance as shown in FIGS. 2c, 2d. Each of reference numerals 20a and 20b represents a monopolar plate. Each of reference numerals 30a and 30b represents an end plate.

FIG. 2a and 2b are plan views showing an anode surface and a cathode surface of the MEA 10 in the fuel cell stack of FIG. 1, respectively. FIG. 2c and 2d are plan views showing an anode surface and a cathode surface of the BP 20 in the fuel cell stack of FIG. 1, respectively. In Figures 2a-2d, each of reference numerals 23a, 23b represents a fuel manifold and each of reference numerals 24a, 24b represents an oxidant manifold.

In the above typical fuel cell stack, the anode surfaces and cathode surfaces of the MEA 10 and the BP 20 can be confused so that they can be reversely stacked. In particular, when the stack 1 is manufactured by stacking the MEA 10 and the BP 20, it is impossible or very difficult to acknowledge whether the MEA 10 and/or the BP 20 are reversely stacked, viewing only the appearance. Accordingly, in the above fuel cell stack, it judges that the stack is normally manufactured by checking current generated for a predetermined load while supplying fuel and oxidant after manufacturing the fuel cell. As a result, there is the problem that when the stack is found to be defective, it must be disassembled and then reassembled.

Hereinafter, embodiments easily carried out by those skilled in the art to which the present invention belongs will be described with reference to the accompanying drawings. However, in the drawings the thickness and the size of each constituent are exaggerated for the convenience and the clearness of explanation. In the drawings the same reference numerals indicate similar or identical elements.

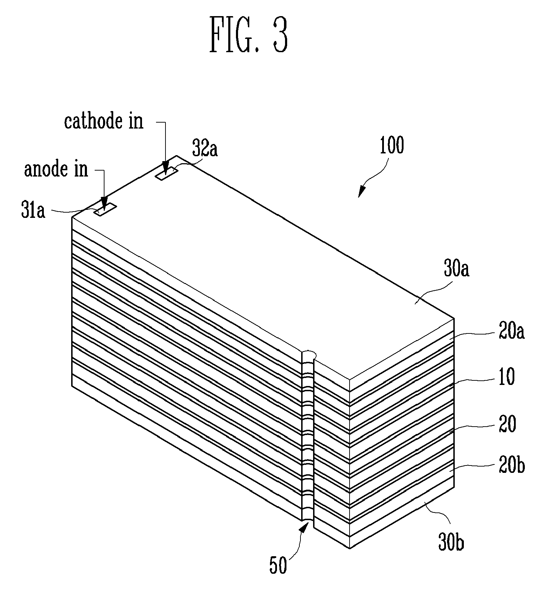

FIG. 3 is a schematic view of the fuel cell stack according to one embodiment of the present invention.

Referring to FIG. 3, the fuel cell stack 100 includes a membrane electrode assembly 10 (MEA), a bipolar plate 20 (BP), two monopolar plates 20a, 20b, a pair of end plates 30a, 30b, and a stack direction display part (or a plate orientation indicator) 50. In one embodiment, if the BP 20 is omitted, the fuel cell stack 100 can be corresponded to the fuel cell having one unit cell.

The fuel cell stack 100 includes the stack direction display part 50 for preventing the anode surfaces and the cathode surfaces of the MEA 10 and the BP 20 from being reversely stacked. The stack direction display part 50 is formed of a prominence and depression part in a concave shape on each side of the MEA 10, the BP 20, the monopolar plates 20a, 20b, and the pair of end plates 30a, 30b and can be installed on the same position to be arranged in a line when stacking them. In one embodiment, when the stack direction display part 50 is formed in one prominence and depression part, in order to clearly differentiate a normal stack state and a reverse stack state, the stack direction display part 50 is formed to one side of the centre of the side of the stack 100 on which the part 50 is installed. Preferably, the part 50 is formed less than 25% of the length of the side from one end.

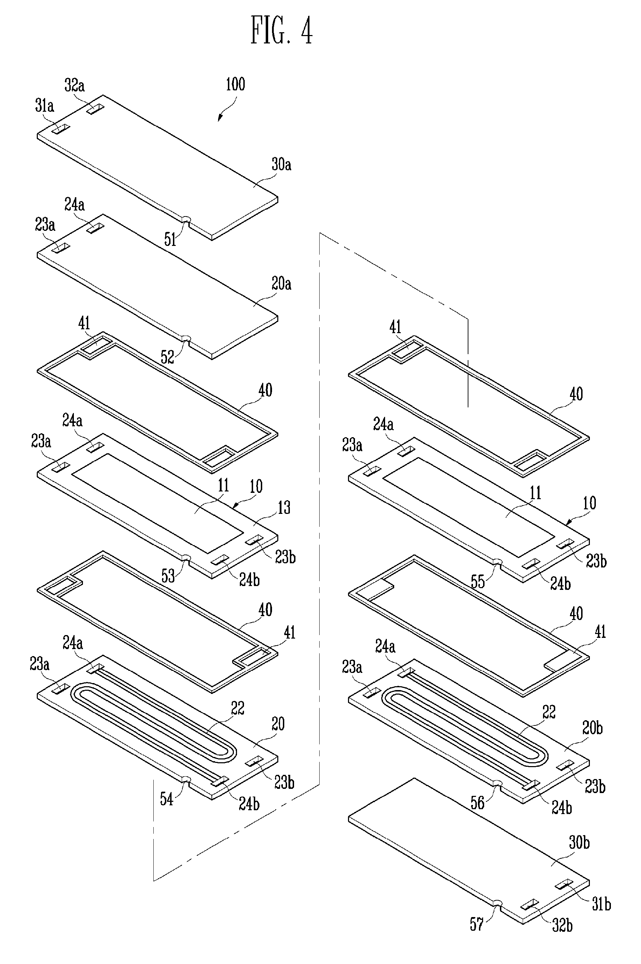

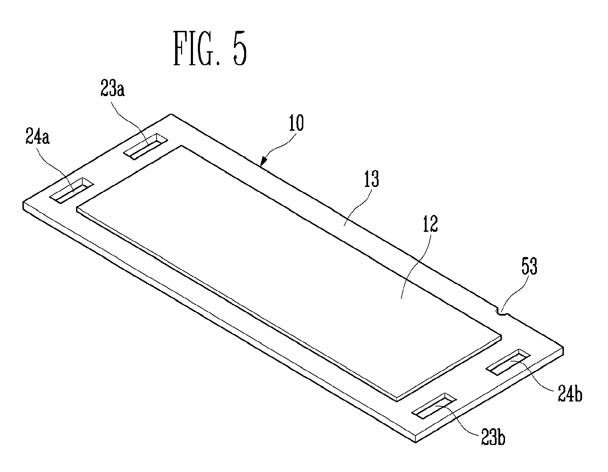

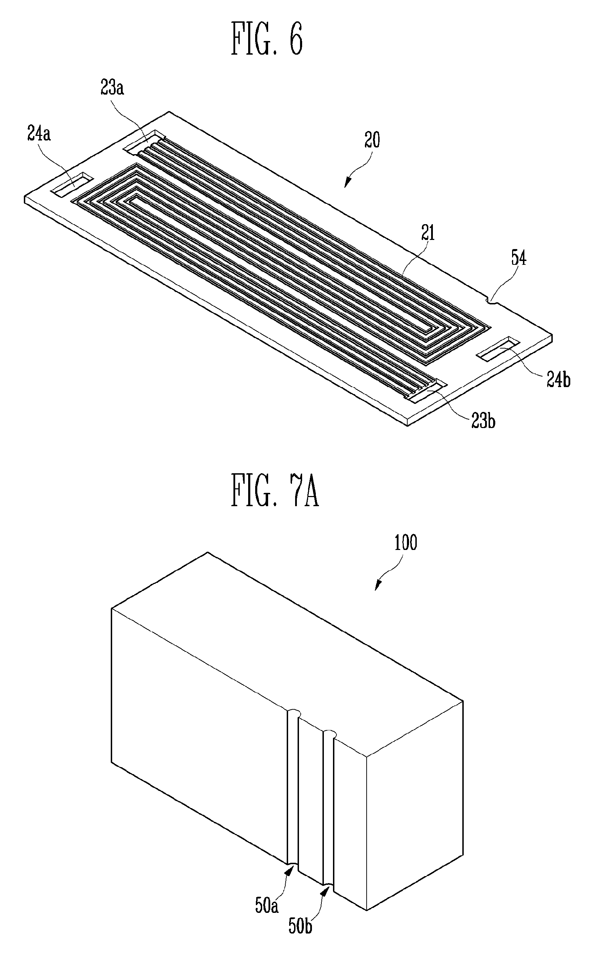

FIG. 4 is an exploded perspective view showing the fuel cell stack according to one embodiment of the present invention. And, FIG 5 is a perspective view showing the cathode surface of the MEA in the fuel cell stack of FIG. 4 and FIG. 6 is a perspective view showing the anode surface of the BP in the fuel cell stack of FIG. 4.

Referring to FIGS. 4 and 5, the MEA 10 of the fuel cell stack 100 includes an anode electrode 11, a cathode electrode 12, and an electrolyte membrane 13 positioned between the anode electrode 11 and the cathode electrode 12.

The electrolyte membrane 13 includes an opening part for forming fuel manifolds 23a, 23b and oxidant manifolds 24a, 24b. Also, the electrolyte membrane 13 includes stack direction display parts 53, 55 displaying a stack direction so as not to reversely stack the anode surface on which the anode electrode 11 is formed and the cathode surface on which the cathode electrode 12 is formed. The stack direction display parts 53, 55 may be implemented by one prominence and depression in a concave shape. In Figures 3-6, the stack direction display parts 51-57 are embodied as a substantially semi-circular concave (or notch) shape. However, the stack direction display parts 51-57 may have a different configuration as long as they can indicate a proper orientation of the plates of the fuel cell stack. For example, the concave shape may be rectangular, triangular, polygonal or sawtooth. The same applies to the remaining embodiments with respect to the concave shape.

The anode electrode 11 described above may include a catalyst layer, a microporous layer, and a backing layer. Similarly, the cathode electrode 12 may include the catalyst layer, the microporous layer, and the backing layer.

The catalyst layers of the anode electrode 11 and the cathode electrode 12 perform a reaction promoting role for chemically and rapidly reacting fuel or oxidant supplied. In one embodiment, the catalyst layer includes at least one metal catalyst selected from a group consisting of platinum, ruthenium, osmium, alloy of platinum-ruthenium, alloy of platinum-osmium, alloy of platinum-palladium, and alloy of platinum-M (M is at least one transition metal selected from a group consisting of Ga, Ti, V, Cr, Mn, Fe, Co, Ni, Cu, and Zn). On the other hand, the catalyst layer may include at least one metal catalyst selected from a group consisting of platinum, ruthenium, osmium, alloy of platinum-ruthenium, alloy of platinum-osmium, alloy of platinum-palladium, and alloy of platinum-M (M is at least one transition metal selected from a group consisting of Ga, Ti, V, Cr, Mn, Fe, Co, Ni, Cu, and Zn), which are impregnated in a carrier. Any materials with conductivity can be used as the carrier, but it is preferable to use carbon carrier.

The microporous layers of the anode electrode 11 and the cathode electrode 12 may function to uniformly distribute and supply fuel or oxidant to each catalyst layer. In particular, the microporous layer of the cathode side may function to smoothly exhaust water generated from the catalyst layer of the cathode side. The respective microporous layers described above can be implemented by carbon layers coated on each backing layer. Also, the respective microporous layers may include at least one carbon material selected from a group consisting of graphite, carbon nano tube (CNT), fullerene (C60), activated carbon, vulcan, ketjen black, carbon black, and carbon nano horn, and further include at least one binder selected from a group consisting of poly(perfluorosulfonic acid), poly(tetrafluoroethylene), and fluorinated ethylene-propylene.

The backing layers of the anode electrode 11 and the cathode electrode 12 may function to back each catalyst layer and at the same time, to distribute fuel, water, air, etc., to collect electricity generated, and to prevent loss of materials in each catalyst layer. The backing layer described above can be implemented by carbon base materials, such as carbon cloth, carbon paper, etc.

As proton conductive polymer capable of manufacturing the electrolyte membrane 13, there may be fluorine polymer, ketonic polymer, benzimidazolic polymer, esteric polymer, amide-based polymer, imide-based polymer, sulfonic polymer, styrenic polymer, hydro-carbonaceous polymer, etc. The concrete example of the proton conductive polymer may include poly(perfluorosulfonic acid), poly(perfluorocarboxylic acid), a copolymer of fluorovinylether and tetrafluoroethylene including sulfonic acid group, defluorinated sulfide polyetherketon, aryl keton, poly(2,2'-(m-phenylene)-5,5'-bibenzimidazole), (poly(2,2'-(m-phenylene)-5,5'-bibenzimidazole)), poly (2,5-benzimidazole), polyimide, polysulfon, polystyrene, polyphenylene, etc. but is not limited thereto. Preferably, the electrolyte membrane 13 has the thickness of 0.1 mm or less in order to effectively pass through the proton.

Solvent may be used upon producing the electrolyte membrane 1. Here, the usable solvent may include one solvent and at least two mixture solvent selected from a group consisting of alcohol such as ethanol, isopropylalcohol, n-propylalcohol, and butylalcohol; water; dimethylsulfoxide (DMSO), dimethylacetamide (DMAc), and N-methylpyrrolidone (NMP).

Referring to FIGS. 4 and 6, the BP 20 of the fuel cell stack 100 serves as a connector electrically connecting neighboring unit cells while forming a path for fuel such as hydrogen, etc., or oxidant such as oxygen, etc., supplied to the MEA 10. To this end, one surface of the BP 20 is provided with a fuel flow channel 21 in a meandering shape and other surface thereof is provided with an oxidant flow field 21 in a meandering shape. The fuel flow channel 21 and the oxidant flow channel 22 can be formed in applicable various shapes other than the meandering shape and can be formed in a different shape from each other. Also, the BP 20 includes the stack direction display parts 52, 53, 56 for preventing the anode surface on which the fuel flow channel 21 is formed and the cathode surface on which the oxidant flow channel 22 is formed from being reversely stacked in manufacturing the stack.

The stack direction display parts 52, 54, 56 may be formed of a prominence and depression part in a concave shape on one side of the bipolar plate 20.

The fuel cell stack 100 includes the bipolar plate 20 having the fuel flow channel 21 and the oxidant flow channel 22 integrally formed on both surfaces thereof and a monopolar plate 20a having the fuel flow channel 22 on one surface thereof and a monopolar plate 20b having the oxidant flow channel 21 on one surface thereof. The first monopolar plate 20a is installed to be opposite to the anode electrode 11 of the MEA 10 having the fuel flow channel 21 positioned on the outermost of one side thereof in a stack direction and the second monopolar plate 20b is installed to be opposite to the cathode electrode 12 of the MEA 10 having the oxidant flow channel 22 positioned on the outermost of other side thereof in a stack direction. Also, the first and second monopolar plates 20a, 20b include the stack direction display parts 52, 56 for preventing the anode surface and the cathode surface from being reversely stacked in manufacturing the stack. The stack direction display parts 52, 56 each may be formed of a prominence and depression part in a concave shape on one side of the first and second monopolar plates 20a, 20b.

The following description will be described under the assumption that the first and second monopolar plates 20a, 20b are included in the BP 20, without describing the first and second monopolar plates 20a, 20b separately.

The BP 20 can be implemented by materials, such as graphite, carbon, metal whose surface is coated with material with excellent corrosion resistance, or alloy with strong corrosion resistance, etc. For example, the present invention can use a stainless steel part with a structure that conductive metal particles on the surface of the stainless steel are protruded penetrating through a passivity strip foil.

The stack structure of the MEA 10 and the BP 20 includes fuel manifolds 31a, 31b for the flow of fuel and oxidant manifolds 32a, 32b for the flow of oxidant. To this end, each MEA 10 and each BP 20 includes opening parts for forming the fuel manifolds 31a, 31b and the oxidant manifolds 32a, 32b. The fuel manifolds 31a, 31b are connected to the fuel flow channel 21 of the BP 20 and the oxidant manifolds 32a, 32b are connected to the oxidant flow channel 22 of the BP 20.

Referring again to FIG. 4, the fuel cell stack 100 includes the first end plate 30a positioned on other surface of the outermost the one side of the BP 20a and a second plate 30b positioned on other surface of the outermost of the other side of the BP 20b. The first end plate 30a and the second end plate 30b are provided with an inlet hole 31a and an outlet hole 31b connected to the fuel manifolds 23a, 23b, respectively, and an inlet 32a and an outlet hole 32b connected to the oxidant manifolds 24a, 24b, respectively. Also, the first and second end plates 30a, 30b includes stack direction display parts 51, 57 for preventing one surface and other surface from being reversely stacked in manufacturing the stack. The stack direction display parts 51, 57 each is formed of a prominence and depression in a concave shape on one side of the first and second end plates 30a, 30b.

The first end plate 30a and the second end plate 30b can be implemented by the material mixing glass filler with thermosetting resin and thermoplastic resin or polyphenylene sulfide (PPS) in a single body with the first and second monopolar plates 20a, 20b. Meanwhile, the inlet hole 31a and outlet hole 31b for the flow of fuel and the inlet hole 32a and outlet hole 32b for the flow of oxidant can be formed on the side of the stack structure in addition to in the manner of forming to be penetrated through the pair of end plates 30a.

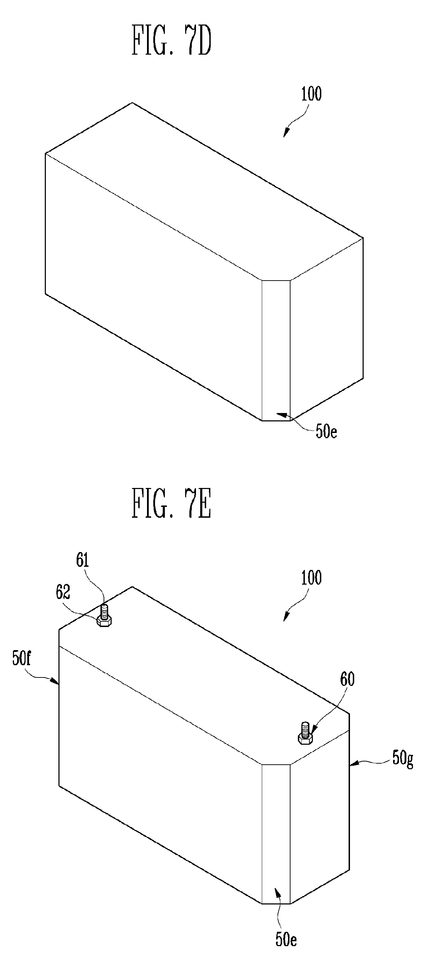

Also, the first end plate 30a and the second end plate 30b are oppositely pressed by means of the tie means to be applied approximately uniform tie pressure on the both surfaces of the stack structure in the stack direction opposite to the stack direction of the stack. (see FIG. 7e)

The fuel cell stack 100 includes a gasket 40 positioned between the MEA 10 and the BP 20 and sealing the diffusion layer of the MEA 10 supervising the flow of fuel. The gasket 40 includes an opening part 41 corresponding to an active region formed with the anode electrode 11 or the cathode electrode 12 of the MEA 10, a region formed with the fuel flow channel 21 or the oxidant flow channel 22 of the BP 20, a region formed with the fuel manifolds 23a, 23b, and a region formed with the oxidant manifolds 24a, 24b.

The gasket 40 may be formed of excellent materials in elasticity and retention of stress against thermal cycle and as the materials of the gasket 40, there are rubber, acryl-based material, silicon-based material or thermoplastic elastomer (TPE), metal etc. In one embodiment, although the stack direction display part is not formed under the assumption that the gasket 40 is not exposed to the external, when the gasket 40 is exposed to the outer surface of the stack, the gasket 40 can be formed with the stack direction display part. In one embodiment, the formed stack direction display part is positioned to be arranged in a line with the stack direction display part other parts.

FIGS. 7a to 7e are schematic views for a fuel cell stack according to another embodiment of the present invention.

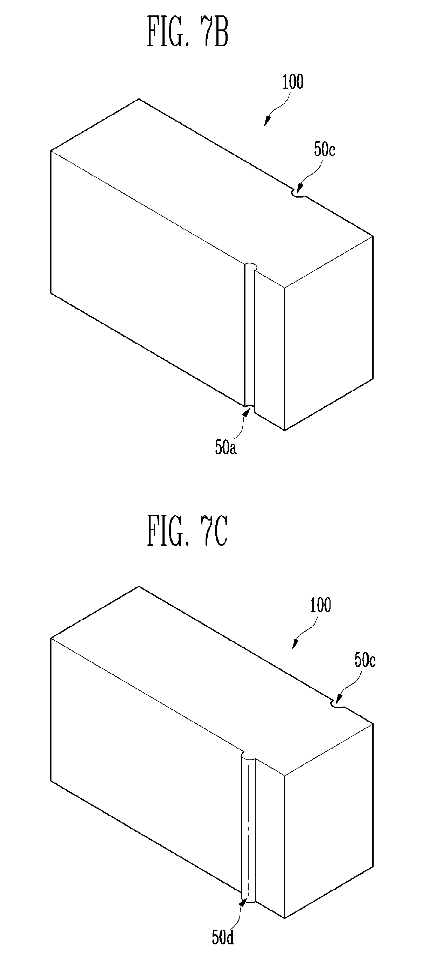

The fuel cell stack 100 includes two stack direction display parts 50a, 50b formed on one side of the stack as shown in FIG. 7a or can include two stack direction display parts 50a, 50c each formed on both sides of the stack as shown in FIG. 7b. In another embodiment, the stack 100 may include more than two stack direction display parts on either one side or both sides. In one embodiment, as shown in FIG. 7b, the two stack direction display parts 50a, 50c are arranged by crossing to each other for preventing them from having the same shape when the MEA or the BP is reversed. The stack direction display parts 50a, 50b, 50c may be implemented by a prominence and depression in a concave shape. In the case of forming the stack direction display parts on both sides, the stack direction display parts may be installed at the position where a normal stack state and a reversed stack of the MEA or the BP can easily be discriminated by appearances.

Also, the fuel cell stack 100 can include one stack direction display part 50c formed on one side of the stack and one stack direction display parts 50d formed on another one side as shown in FIG. 7c. In the modification example, the stack direction display part 50c is implemented by a prominence and depression in a concave shape and another stack direction display part 50d is implemented by a prominence and depression in a convex shape. In Figure 7C, the stack direction display part 50d is embodied as a substantially semi-circular convex (or bump) shape. However, the stack direction display part 50d may have a different configuration as long as they can indicate a proper orientation of the plates of the fuel cell stack. For example, the convex shape may be rectangular, triangular, polygonal or sawtooth. The same applies to the remaining embodiments with respect to the convex shape.

Also, the fuel cell stack 100 can include a side corner cutting part (or corner-cut) 50e as the stack direction display part as shown in FIG. 7d. The side corner cutting part 50e cuts a portion of corners of the MEA and the BP having approximately rectangular shape on a plane. This performs a function to be easily able to acknowledge the manufacturing error by appearances when the stack is manufactured in the state that the MEA or the BP is reversed, similarly to the case of the stack direction display unit in a prominence and depression form described above.

The side corner cutting part 50e can be formed on two or three side corners of the stack. For example, the fuel cell stack 100 can include side corner cutting parts 50e, 50f, 50g each formed at three side corners of four side corners connecting four sides of the stack in an approximately rectangular parallelepiped shape as shown in FIG. 7e. In this case, the remaining one side corner, that is the side corner, which is not cut, serves as the stack direction display part. In another embodiment, the side corner cutting part 50e have a different configuration as long as they can indicate a proper orientation of the plates of the fuel cell stack. For example, the side corner cutting part 50e may have circular or other polygonal shapes. The same applies to the remaining embodiments with respect to the side corner cutting part. The fuel cell stack 100 includes a tie means (or combiner) 60 for tying the MEA and the BP and the end plate as shown in FIG. 7e. The tie means 60 ties the stack components at a predetermined pressure. And, the tie means 60 can be implemented by a bolt 61 and a nut 62 penetrating through the stack 100, but it is not limited thereto.

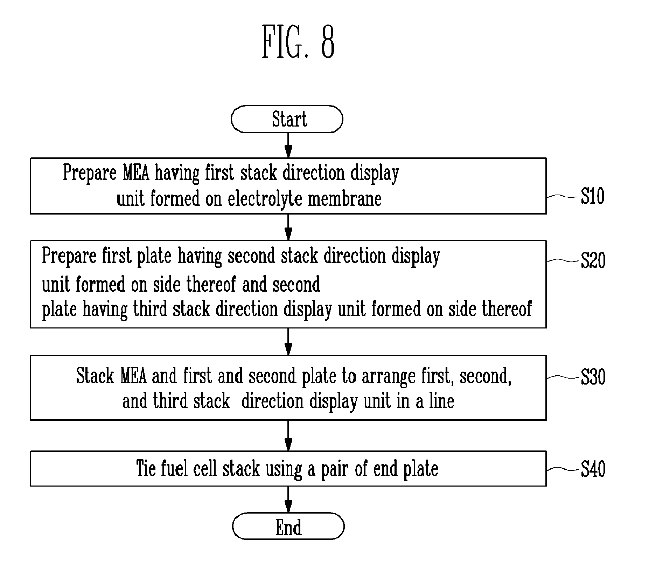

FIG. 8 is a flow chart for explaining a manufacturing method of the fuel cell stack according to one embodiment of the present invention. The manufacturing method of the fuel cell stack will be described with reference to FIG. 8 as follows.

First, the membrane electrode assembly (MEA) including the anode electrode, the cathode electrode, and the polymer electrolyte membrane positioned therebetween and having the first stack direction display part formed on the side of the electrolyte membrane is prepared (or provided) (S10).

And, the first plate having the fuel flow channel formed on one surface thereof and having the second stack direction display part formed on the side thereof and the second plate having the oxidant flow channel formed on one surface thereof and having the third stack direction display part formed on the side thereof are prepared (or provided) (S20). Herein, the first plate and the second plate correspond to the pair of monopolar plate.

Next, the membrane electrode assembly, the first plate, and the second plate to arrange the first, second, and third stack direction display parts in a line are stacked (S30). This case relates to the fuel cell state configured of a single fuel cell. When stacking a plurality of unit cells in order to obtain desired voltage, the MEA and the BP can further be inserted by a desired number.

In the stack step (S30), the first gasket can be inserted between the membrane electrode assembly and the first plate and the second gasket can be inserted between the membrane electrode assembly and the second plate. Also, when the MEA and the BP are further installed, the gasket can further be inserted between the bipolar plate and the membrane electrode assembly.

Next, the first end plate is positioned on other surface of the first plate and the second end plate is positioned on other surface of the second plate and the first and second end plates are then tied with constant force by means of the tie means (S40).

In at least one embodiment, since the reversely stacked MEA or BP can easily be acknowledged by appearances while manufacturing the stack, the stack can easily be manufactured without the manufacturing error. Further, at least one embodiment of the present invention has an advantage that the manufacturing error reversely stacking the anode surfaces and the cathode surfaces of the MEA and the BP in manufacturing the fuel cell stack can be prevented, making it possible to reduce the defect of the completed stack.

In at least one embodiment, in a manufacturing process of the fuel cell stack, the manufacturing error reversely stacking the anode surface and the cathode surface can be prevented by judging as to whether the anode surface and the cathode surface are reversed by viewing the appearance of the completed stack, rather than judging as to whether the anode surface and the cathode surface are reversely manufactured by acknowledging the output current of the completed stack. Further, at least one embodiment has advantages that a bad effect on the completed stack performance due to a repeated stack work regarding the stack judged as the defective stack can be prevented and the defective proportion of the stack due to the manufacturing error can greatly be reduced.

Although a few embodiments of the present invention have been shown and described, it would be appreciated by those skilled in the art that changes might be made in this embodiment without departing from the scope of the invention as defined in the claims.

## Claims

1. A fuel cell stack comprising:
a membrane electrode assembly plate (10) comprising an anode electrode (11) and a cathode electrode (12);
a first plate (20a) comprising a fuel flow channel (21) facing the anode electrode (11) and configured to flow a fuel therethrough while contacting the anode electrode (11); and
a second plate (20b) comprising an oxidant flow channel (22) facing the cathode electrode (12) and configured to flow an oxidant therethrough while contacting the cathode electrode (12),
wherein each of the membrane electrode assembly plate (10) and the first and
second plates (20a, 20b) comprises means (50) for indicating an orientation of the plates, and wherein the indicating means of each plate is aligned with the indicating means of the other plates when the plates in the stack are properly oriented.

2. The fuel cell stack according to claim 1, wherein:
the membrane electrode assembly plate (10), further comprises a polymer electrolyte membrane (13) positioned between the anode electrode (11) and the cathode electrode (12).

3. The fuel cell stack as claimed in claim 1 or 2, wherein the indicating means comprises at least one of a bump on a side of each plate and a notch on a side of each plate.

4. The fuel cell stack as claimed in any one of the preceding claims, wherein each plate comprises two or more plate orientation indicators.

5. The fuel cell stack as claimed in claim 4, wherein each plate comprises two or more plate orientation indicators on a same side thereof.

6. The fuel cell stack as claimed in claim 4, wherein each plate comprises at least one plate orientation indicator on a side thereof and further comprises at least one plate orientation indicator on another side thereof.

7. The fuel cell stack as claimed in any one of claims 1 to 4, wherein each of the membrane electrode assembly plate (10) and the first and second plates (20a, 20b) is substantially rectangular, and wherein each plate orientation indicator comprises at least one corner-cut of each plate.

8. The fuel cell stack as claimed in any one of the claims, further comprising a first gasket inserted between the membrane electrode assembly plate (10) and the first plate (20a) and a second gasket inserted between the membrane electrode assembly plate (10) and the second plate (20b).

9. The fuel cell stack as claimed in any one of the preceding claims, further comprising a third plate (20) which has a fuel flow channel (21) and an oxidant flow channel (22) on both surfaces thereof, wherein the third plate (20) is interposed between the membrane electrode assembly plate (10) and the second plate (20b).

10. The fuel cell stack as claimed in any one of the preceding claims, further comprising a pair of end plates (30a, 30b) opposing each other, wherein each of the first and second plates (20a, 20b) comprises front and rear surfaces opposing each other, wherein the front surfaces of the first and second plates (20a, 20b) face the membrane electrode assembly plate (10) and wherein the pair of end plates contact the rear surfaces of the first and second plates (20a, 20b), respectively.

11. A manufacturing method of a fuel cell stack comprising:
providing a membrane electrode assembly plate (10) comprising an anode electrode (11) and a cathode electrode (12), wherein the membrane electrode assembly plate (10) comprises a first plate orientation indicator (53, 55) configured to indicate an orientation thereof;
providing a first plate (20a) comprising a fuel flow channel (21) facing the anode electrode (11) and configured to flow a fuel therethrough while contacting the anode electrode (11), wherein the first plate (20a) comprises a second plate orientation indicator (52) configured to indicate an orientation thereof;
providing a second plate (20b) comprising an oxidant flow channel (22) facing the cathode electrode (12) and configured to flow an oxidant therethrough while contacting the cathode electrode (12), wherein the second plate (20b) comprises a third plate orientation indicator (56) configured to indicate an orientation thereof; and
stacking the membrane electrode assembly plate (10), the first plate (20a), and the second plate (20b) such that the plate orientation indicator of each plate is aligned with the plate orientation indicators of the other plates.

12. The manufacturing method as claimed in claim 11, wherein the providing of the membrane electrode assembly plate (10) comprises forming a notch by punching a side portion thereof.

13. The manufacturing method as claimed in claim 11 or 12, wherein the providing of the first and second plates (20a, 20b) comprises forming notches by grinding sides of the first and second plates (20a, 20b).

14. The manufacturing method as claimed in claim 11, wherein each of the membrane electrode assembly plate (10) and the first and second plates (20a, 20b) is substantially rectangular, and wherein the method further comprises forming at least one corner-cut of each plate by cutting or grinding at least one corner of each plate.

15. The manufacturing method as claimed in any one of claims 11 to 14, further comprising:
positioning a first gasket between the membrane electrode assembly plate (10) and the first plate (20a);
positioning the second gasket between the membrane electrode assembly plate (10) and the second plate (20a);
providing first and second end plates (30a, 30b), wherein each of the first and second plates (30a, 30b) comprises front and rear surfaces opposing each other, wherein the front surfaces of first and second plates (20a, 20b) face the membrane electrode assembly plate (10) and wherein the first and second end plates (30a, 30b) contact the rear surfaces of the first and second plates (20a, 20b), respectively;
positioning the first and second end plates (30a, 30b) on the rear surfaces of the first and second plates (20a, 20b), respectively; and
combining the membrane electrode assembly plate (10), the first and second plates (20a, 20b) and the end plates (30a, 30b) so as to form a fuel cell stack.
